# EUROPEAN PATENT SPECIFICATION

(11) **EP 3 874 427 B1**
(45) Date of publication and mention of the grant of the patent: **03.06.2026**
(21) Application number: 19797666.5
(22) Date of filing: 30.10.2019
(51) Int. Cl.: G06Q 10/00

(54) **STERILE PRODUCT INVENTORY AND INFORMATION CONTROL**
STERILE PRODUKTINVENTARISIERUNG UND INFORMATIONSKONTROLLE
INVENTAIRE DES PRODUITS STÉRILES ET CONTRÔLE DES INFORMATIONS

(30) Priority: 30.10.2018 US 201816175306
(43) Date of publication of application: 08.09.2021
(73) Proprietor: Global Life Sciences Solutions USA LLC, Marlborough, MA 01752 (US)
(72) Inventor: PIZZI, Vincent Francis, Millis, Massachusetts (US)
(74) Representative: Bedford, Grant Richard
(86) International application number: PCT/EP2019/079739
(87) International publication number: WO 2020/089339

(56) References cited:
- EP-B1- 1 889 197
- CA-A1- 2 929 604
- US-A1- 2014 076 973
- US-A1- 2017 173 262

## Description

### FIELD OF THE DISCLOSURE

This disclosure relates generally to improved management of sterile product inventory and, more particularly, to improved sterile product radiofrequency identification (RFID) tags, associated systems/apparatus, and methods of use.

### BACKGROUND

Radiofrequency identification (RFID) involves wireless use of electromagnetic fields to transfer data to automatically identify and track tags attached to objects. The tags contain electronically stored information. An RFID reader includes a receiver that can decode the electronically stored information. Some tags are powered by electromagnetic induction from magnetic fields produced near the reader. Some tags collect energy from the interrogating radio waves and act as a passive transponder. Other types of tags have a local power source such as a battery and may operate at hundreds of meters from the reader.

RFID tags are used in a variety of environments, such as in healthcare, retail or commercial spaces, and industrial warehouses. See, for example, CA 2 929 604 A1 and US 2017/173262 A1. RFID tags can interact with systems in an environment, such as a healthcare environment, to identify objects, determine object location, detect tampering (e.g., opening, etc.), etc. In a healthcare environment, such as a hospital or clinic, the environment can include a variety of information systems, such as hospital information systems (HIS), radiology information systems (RIS), clinical information systems (CIS), and cardiovascular information systems (CVIS), and storage systems, such as picture archiving and communication systems (PACS), library information systems (LIS), and electronic medical records (EMR). These systems may store a variety of information such as patient medication orders, medical histories, imaging data, test results, diagnosis information, management information, and/or scheduling information. A retail or commercial space can also include a variety of information systems, such as a point- of-sale system, a payment information processing system, an inventory management system, and other such systems. These systems may also store a variety of information such as inventory types and amounts, how long a given inventory item has been displayed, how often a given inventory item has been sold, and other such information.

US 2014/076973 A1 relates to authenticating and preventing illegal manufacturing and unauthorized operation of disposable bioprocess components.

While prior RFID techniques can be used to identify devices associated with RFID tags, these techniques are not able to authenticate and prevent illegal manufacturing and unauthorized operation of gamma sterilizable disposable bioprocess components. Therefore, there is a need for apparatus, systems, and associated methods to authenticate and prevent illegal manufacturing of disposable bioprocess components, especially those that are sterilized by gamma irradiation or other process to lower bio-burden of the disposable or limited reuse device, and track location, authorization, and usage of such components, for example.

### BRIEF DESCRIPTION

The present invention, as defined by the appended claims, is thus provided.

### BRIEF DESCRIPTION OF THE DRAWINGS

FIG. 1 illustrates a block diagram of an example system to measure parameters in a container.
FIG. 2 shows an example implementations of a radiofrequency identification tag.
FIGS. 3 illustrates an example disposable component with an integrated radiofrequency identification tag.
FIGS. 4A and 4B show block diagrams of example redundant information storage.
FIG. 5 is a flow chart of an example method of operation of a disposable component with an integrated radiofrequency identification tag.
FIG. 6 depicts an example manual product inventory tracking and data workflow and infrastructure.
FIG. 7 shows an example bioprocess inventory management system.
FIG. 8 illustrates an example process to generate, track, and manage single-use consumables with a radiofrequency identification tag/cloud-based system.
FIG. 9 shows an example infrastructure to provide a secure cloud service for biotechnology companies to manage inventory and product documentation and track usage and status of product delivered to customers.
FIG. 10 illustrates an example radiofrequency-driven inventory management system.
FIG. 11 illustrates a flow diagram of an example method to manage bioprocess product inventory using radiofrequency identification and cloud-based processing.
FIG. 12 is a block diagram of a processor platform structured to execute the example machine readable instructions to implement components disclosed and described herein.

The figures are not scale. Wherever possible, the same reference numbers will be used throughout the drawings and accompanying written description to refer to the same or like parts.

### DETAILED DESCRIPTION

In the following detailed description, reference is made to the accompanying drawings that form a part hereof, and in which is shown by way of illustration specific examples that may be practiced. These examples are described in sufficient detail to enable one skilled in the art to practice the subject matter, and it is to be understood that other examples may be utilized and that logical, mechanical, electrical and other changes may be made without departing from the scope of the subject matter of this disclosure. The following detailed description is, therefore, provided to describe an exemplary implementation and not to be taken as limiting on the scope of the subject matter described in this disclosure. Certain features from different aspects of the following description may be combined to form yet new aspects of the subject matter discussed below.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

While certain examples are described below in the context of medical or healthcare systems, other examples can be implemented outside the medical environment. For example, certain examples can be applied to the handling of non-medical radioactive materials, non-biologic materials, etc.

### I. Overview

### Bioprocessing

Bioprocessing uses living cells and/or cell components (e.g., bacteria, enzymes, chloroplasts, etc.) to obtain desired products. A bioprocess can include cell isolation and cultivation, cell banking and culture expansion, and harvest to terminate culture and collect a live cell batch. A final product can be produced by polishing metabolites through a mixing of a purified bioproduct with excipients and/or other inert ingredients. The final product can be packaged and sold to consumers (e.g., hospitals, clinicians, pharmacies, other healthcare environments, patients, etc.). Bioprocess components can be used in cell therapy, sequencing, and/or other diagnosis/treatment, for example.

Customers, such as hospital, pharmacy, and/or other healthcare institutional customers, may have large inventories of bioprocess products. Such products can have a limited shelf life, so it can be important to track amounts, types, dates, etc., associated with a bioprocess inventory, for example. Additionally, bioprocess products can be vital to successful treatment of patients. Having knowledge of the state of inventory can help the customer ensure a sufficient supply for its patient needs.

In certain examples, RFID tags allow tracking of inventory and can facilitate reordering of materials using passive technology to capture accurate information regarding bioprocess products in inventory in what would otherwise be a resource-intensive process. Cloud-based information storage and processing can also be leveraged for passive uploading, downloading, processing, and tracking of inventory information, for example. Certain examples leverage RFID tags with cloud-based information and tracking to provide customers with accurate information regarding their inventory disposition. Certain examples enable secure information transfer from the cloud via RFID for cloud-based access.

Certain examples provide an ecosystem and passive interface for biopharma products and services. Certain examples provide passive interrogation of inventory with gamma irradiated products (e.g., limited shelf life, etc.) including obtaining certificates/certification without the need for data input, determine accurate batch record lot/part number (PN), identify and track expiration data, etc. A barrier can be created as a differentiator for product stickiness within the biopharma single-use product arena.

In prior systems, customers use inventory management and are required to input lot/PN/expiration traceable data into processing batch records. The information workflow is not regarded as labor intensive, but, rather, is time consuming and can be prone to data entry errors. Accurate inventory tracking and using first in, first out (FIFO) control is critical for gamma irradiated products with a finite shelf life. Often, products must be re-labeled with internal part numbers, a non-value added activity, and cross referencing is also required. Obtaining certificates of quality/analysis is another step for which customers must be logged into a regulatory support site to download documents required for accepting incoming product shipments. The processing suite can include multiple products being produced and requires documentation related to consumable components for billing and batch record recording. Keyboard errors during data entry are another potential risk point for processing documentation. Such manual intervention points can be replaced with a passive information system, for example.

### Example RFID Tagging and Tracking Systems and Associated Methods

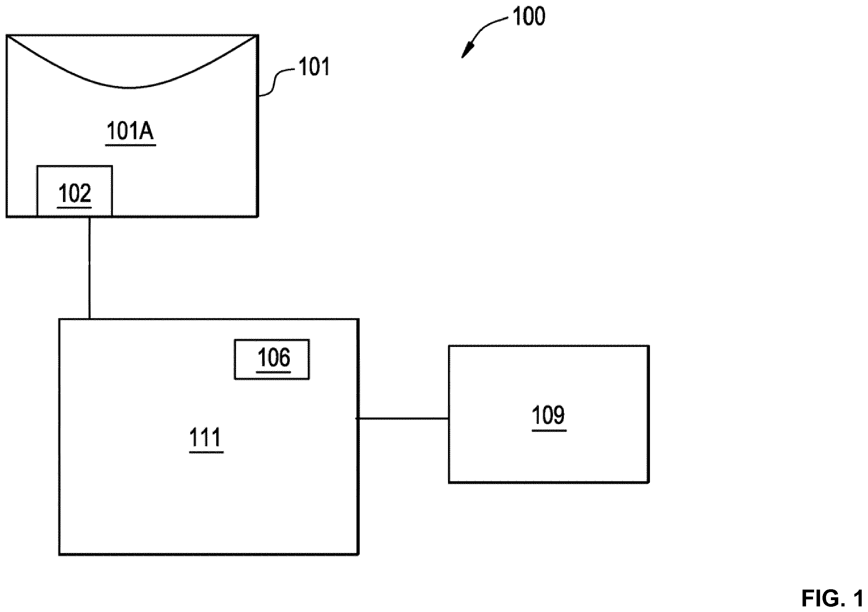

FIG. 1 illustrates a block diagram of an example system 100 to measure parameters in a container 101. The system 100 includes the container 101, a radio frequency identification (RFID) tag 102, a computing device 109, and a measurement device (writer/reader) 111, which includes a reader 106. The RFID tag 102 is incorporated or integrated into the container 101.

In certain examples, the container 101 is a disposable bioprocessing container, a multi-layer bioprocessing film, a cell culture bioreactor, a mixing bag, a sterilization container, a metal container, a plastic container, a polymeric material container, a chromatography device, a filtration device, a chromatography device with any associated transfer conduits, a filtration device with any associated transfer conduits, centrifuge device, a connector, a fitting, a centrifuge device with any associated transfer conduits, a pre-sterilized polymeric material container or any type of container known to those of ordinary skill in the art. The RFID tag 102 can include an antenna and a microchip with a plastic backing (e.g., polyester, polyimide, etc.), for example. In certain examples, the container 101 is a bioprocessing film that can be converted into one or more disposable bio-processing components in a variety of geometries and configurations to hold a solution 101a. In certain examples, the RFID tag 102 is connected by a wireless connection to the measurement device (writer/reader) 111 and the computing device 109.

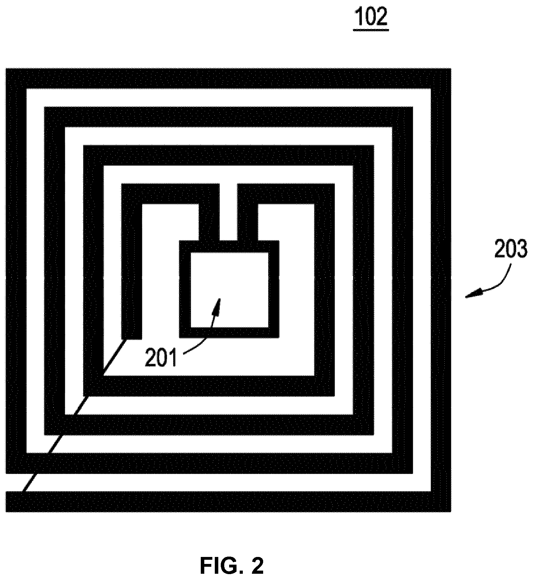

FIG. 2 shows an example implementation of the RFID tag 102. The RFID tag 102 is gamma radiation resistant to levels required for pharmaceutical processing (e.g., 25 to 50 kGy, etc.). The gamma radiation resistance (e.g., immunity to effects of gamma radiation) is provided in several ways and that are used in combination or separately: 1. from the storage of required digital information that allows its error correction; 2. from the use of radiation-hardened CMOS circuitry on RFID tag 102 or from control of recovery of the standard CMOS after gamma irradiation; 3. from the use of FRAM memory; and 4. from the reading of the RFID tag 102 after gamma radiation with different power levels of the reader or at different distances between the reader 106 and the RFID tag 102. The first component of the RFID tag 102 is an integrated circuit memory chip 201 to store and process information as well as modulate and demodulate a radio frequency signal. Also, the memory chip 201 can be used for other specialized functions, such as including a capacitor, including an input for an analog signal, etc. A second component of the RFID tag 102 is an antenna 203 to receive and transmit a radio frequency signal. Data can be encoded for transmission and/or storage using redundancy, Reed-Solomon error correction (or code), Hamming error correction (or code), BCH error correction (or code), etc., to enable error reduction and correction in the data.

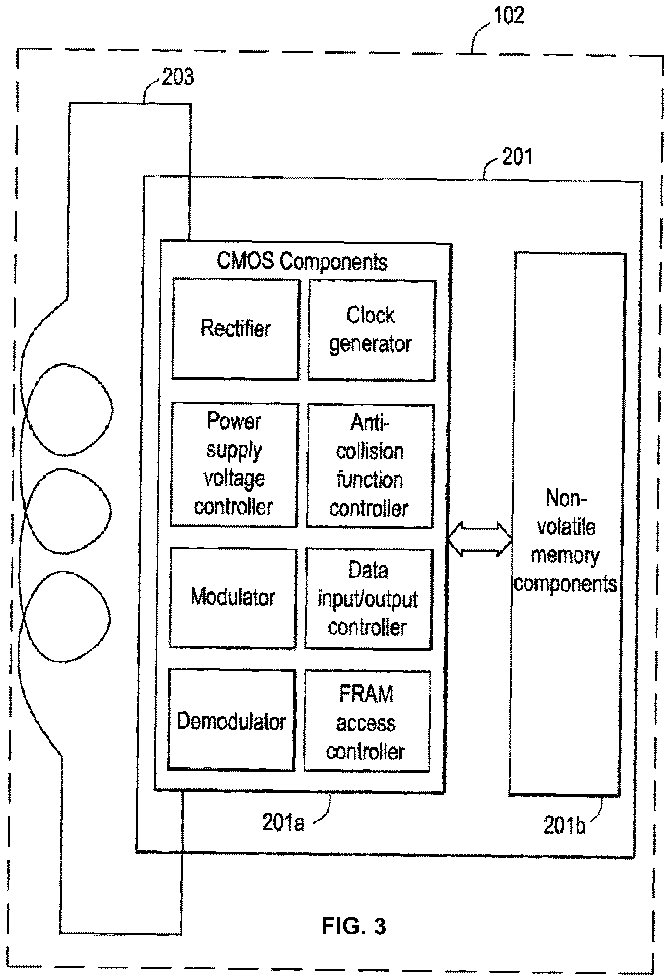

In certain examples, data redundancy is achieved by writing multiple copies of the data into memory to protect the data from memory faults. Writing multiple copies of the data into the memory or writing redundant information on a FRAM chip 201b (FIG. 3) of the RFID tag 102 includes writing information into plurality of regions on the memory chip, for example. Writing redundant information on a FRAM chip of the RFID tag 102 can reduce a gamma irradiation effect that otherwise can cause loss of at least portion of data that will lead to the failure to authenticate a disposable bioprocess component attached to the RFID tag 102, for example.

Referring to FIG. 3, the memory chip 201 includes a complementary metal-oxide semiconductor (CMOS) chip 201a with a ferroelectric random access memory (FRAM) 201b. The memory chip 201 includes the CMOS chip or circuitry 201a and the FRAM circuitry 201b as a part of the RFID tag 102 incorporated into the disposable bioprocess component 101 and preventing its unauthorized use. Examples of the CMOS circuitry 201a components include a rectifier, a power supply voltage control, a modulator, a demodulator, a clock generator, etc.

While FRAM is more gamma radiation resistant than EEPROM (Electrically Erasable Programmable Read-Only Memory), FRAM circuitry still experiences gamma-irradiation effects. For example, after an exposure to a gamma radiation, FRAM experiences a decrease in retained polarization charge due to an alteration of the switching characteristics of the ferroelectric due to changes in the internal fields. This radiation-induced degradation of the switching characteristics of the ferroelectric is due to transport and trapping near the electrodes of radiation-induced charge in the ferroelectric material. Once trapped, the charge can alter the local field around the dipoles, altering the switching characteristics as a function of applied voltage. In addition to the charge trapping, gamma radiation can also directly alter the polarizability of individual dipoles or domains.

In certain examples, the FRAM memory chip 201b of the RFID tag 102 include a standard electric CMOS circuit 201a and an array of ferroelectric capacitors in which the polarization dipoles are temporarily and permanently oriented during the memory write operation of the FRAM. The FRAM device 201b has two modes of memory degradation that include functional failure and stored data upset. Thus, the radiation response effect in the memory chip 201 is a combination of non-volatile memory 201b and the CMOS 201a components in the memory chip 201. Radiation damage in CMOS 201a includes but is not limited to the threshold voltage shift, increased leakage currents, and short-circuit latch up, for example.

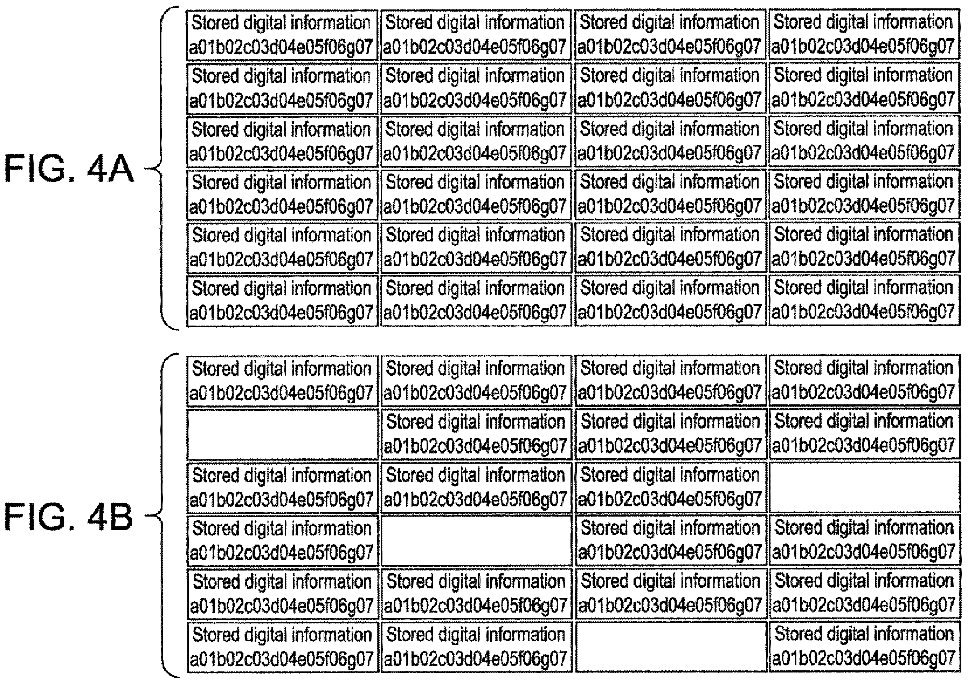

FIGS. 4A and 4B show block diagrams of example redundant information storage. FIG. 4A shows that the same or redundant information can be written and stored in different regions. FIG. 4B illustrates that some information may be lost after gamma radiation sterilization. After the irradiation of the memory chip 201, redundant information storage provides a reliable storage of the information in at least one remaining non-damaged regions of the FRAM memory chip 201. FRAM is a non-volatile memory 201b offering high-speed writing, low power consumption and long rewriting endurance.

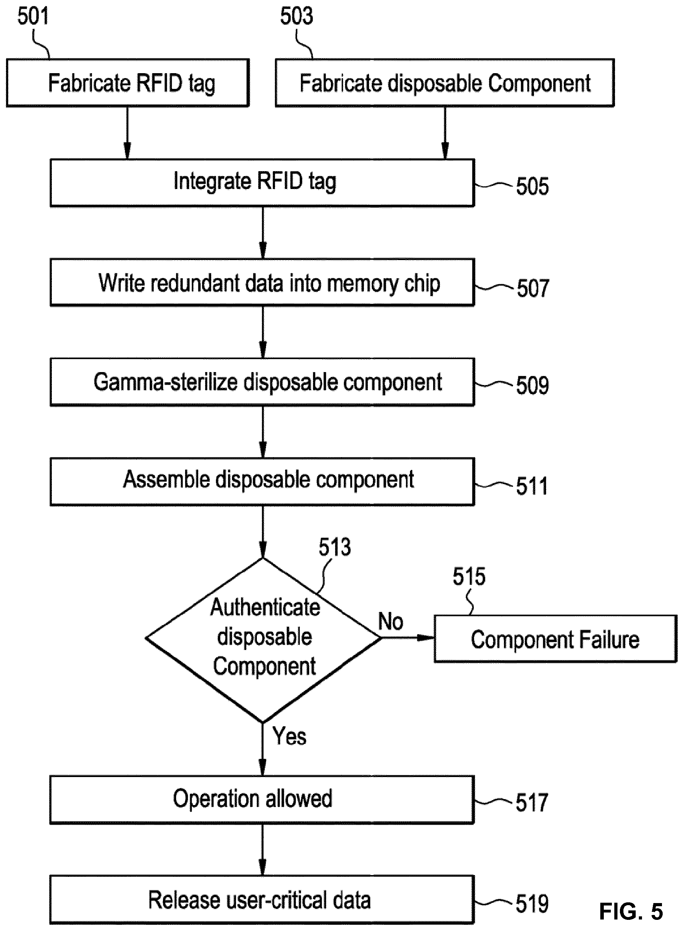

FIG. 5 is a flow chart of an example method of operation of the disposable component with the integrated RFID tag 102. At block 501, the RFID tag 102 is fabricated. For example, the RFID tag 102 can be fabricated by: fabrication of a FRAM memory chip 201 (FIG. 2), fabrication of antenna 203, and attachment of memory chip 201 to antenna 203 art. At block 503, the disposable bioprocess component 101 is fabricated. As stated above, the bioprocess component 101 may be, for example, storage bags, bioreactors, transfer lines, filters, separation columns, connectors, and/or other components.

After the RFID tag 102 and the disposable bioprocess component 101 are fabricated, then, at block 505, the RFID tag 102 is integrated in combination with the disposable bioprocess component 101. For example, the RFID tag 102 can be integrated with the disposable bioprocess component using lamination or molding of the RFID tag 102 into the part of the disposable bioprocess component 101 or attaching the RFID tag 102 to the disposable bioprocess component 101, etc. At block 507, the redundant data is written onto the memory chip 201 of the RFID tag 102. At block 509, the disposable component 101 with an integrated RFID tag 102 is sterilized, such as by radiation sterilization or gamma-sterilization. At block 511 the disposable component 101 is assembled in a biological fluid flow. For example, the disposable bioprocess component 101 may include storage bags, bioreactors, transfer lines, filters, separation columns, connectors, and other components, etc.

At block 513, the disposable component 101 is analyzed to determine whether the component 101 is authentic. For example, the reader 106 of the measurement device 111 is used to authenticate the RFID tag 102 of the disposable component 101. Authentication is performed to prevent illegal use of the disposable bioprocess components, to prevent illegal operation of the disposable bioprocess components, and to prevent illegal pharmaceutical manufacturing, for example. There is a need to authenticate products in supply chain applications because counterfeits can be very similar or even identical to authentic products.

In certain examples, RFIDs are employed for product authentication. The benefits of RFID compared to old authentication technologies include non-line-of-sight reading, item-level identification, non-static nature of security features, and cryptographic resistance against cloning. RFID systems include the RFID tag 102, the reader 106, and an online database, for example. Product authentication using RFIDs can be based on RFID tag authentication and/or identification and additional reasoning using online product data. Furthermore, RFID supports secure ways to bind the RFID tag 102 and the product 101 to resist cloning and forgery.

RFID product authentication can be implemented in a plurality of ways. One product authentication approach is unique serial numbering. By definition, one of the fundamental assumptions in identification, and thus also in authentication, is that individual entities possess an identity. In supply chain applications, issuing unique identities is efficiently accomplished with RFID. There is a unique serial numbering and confirmation of validity of identities as the simplest RFID product authentication technique. The simplest cloning attack against an RFID tag 102 only requires the reader 106 reading the tag serial number and programming the same number into an empty tag. However, there is an essential obstacle against this kind of replication. RFID tags have a unique factory programmed chip serial number (or chip ID). To clone a tag's ID would therefore also require access to the intricate process of chip manufacturing.

Another product authentication approach is track and trace-based plausibility check. Track and trace refers to generating and storing inherently dynamic profiles of individual goods when there is a need to document pedigrees of the disposable bioprocess product, or as products move through the supply chain. The product specific records allow for heuristic plausibility checks. The plausibility check is suited for being performed by customers who can reason themselves whether the product is original or not, though it can also be automated by suitable artificial intelligence. Track and trace is a natural expansion of unique serial numbering approaches. Furthermore, track and trace can be used in supply chains for deriving a product's history and for organizing product recalls. In addition, the biopharmaceutical industry has legislation that demands companies to document product pedigrees. Therefore, the track and trace based product authentication can be cost-efficient, as also other applications to justify the expenses.

Another product authentication approach is secure object authentication technique that makes use of cryptography to allow for reliable authentication while keeping the critical information secret in order to increase resistance against cloning. Because authentication is needed in many RFID applications, the protocols in this approach come from different fields of RFID security and privacy. In one scheme, it is assumed that tags cannot be trusted to store long-term secrets when left in isolation. Thus, the tag 102 is locked without storing the access key, but only a hash of the key on the tag 102. The key is stored in an online database of the computer 109 connected to the reader 106 and can be found using the tag's 102 ID. This approach can be applied in authentication; namely, unlocking a tag would correspond authentication.

Another product authentication approach utilizes product specific features. In this approach, the authentication is based on writing on the tag 102 memory 201 a digital signature that combines the tag 102 ID number and product specific features of the item that is to be authenticated. These product specific features of the item that is to be authenticated can be response of the integrated RFID sensor. The sensor is fabricated as a memory chip with an analog input from a separate micro sensor. These features can be physical or chemical properties that identify the product and that can be verified. The chosen feature is measured as a part of the authentication by the reader 106 and if the feature used in the tag's signature does not match the measured feature, the tag-product pair is not original. This authentication technique needs a public key stored on an online database that can be accessed by the computer 109 connected to the measurement device 111. An offline authentication can be also used by storing the public key on the tag 102 that can be accessed by the computer 109 connected to the measurement device, though this decreases the level of security.

The gamma resistant RFID tag 102 facilitates authentication of the disposable component 101 onto which it is attached. Authentication involves verifying the identity of a user logging onto a network by using the measurement device 111 and the reader 106 and the disposable component or assembled component system 101. Passwords, digital certificates, and smart cards can be used to prove the identity of the user to the network. Passwords and digital certificates can also be used to identify the network to the client. Examples of employed authentication approaches include: Passwords (What You Know) and Digital certificates, physical tokens (What You Have, for example integrated RFID sensor with its response feature); and their combinations. In certain examples, two independent mechanisms can be used for authentication. For example, requiring a smart card and a password is less likely to allow abuse than either component alone.

One of the authentication approaches using the gamma resistant RFID tag 102 on the disposable component 101 involves mutual authentication between reader 106 and RFID tag 102, which is based on the principle of three-pass mutual authentication in accordance with ISO 9798-2, in which a secret cryptographic key is involved. In this authentication method, the secret keys are not transmitted over the airways, but rather only encrypted random numbers are transmitted to the reader 106. These random numbers are always encrypted simultaneously. A random session key can be calculated by the measurement device 111 and the reader 106 from the random numbers generated, in order to cryptologically secure the subsequent data transmission.

Another authentication approach is when each RFID tag 102 has a different cryptological key. To achieve this, a serial number of each RFID tag 102 is read out during its production. A unique key is further derived using a cryptological algorithm and a master key, and the RFID tag 102 is thus initialized. Thus, each RFID tag 102 receives a key linked to its own ID number and the master key.

RFID tags with unique serial numbers can be authenticated and also access lot information (e.g. date of manufacture, expiration date, assay results, etc.) from the device manufacturer. The serial number and lot information is transferred to a user accessible server once the product has been shipped. The user upon installation then reads the RFID tag that transmits the unique serial number to a computer with a secure internet link to the customer accessible server. A match of the serial number on the server with the RFID tag serial number then authenticates the device and permits use of the device. Once the information is accessed on the server, the information then becomes user inaccessible to prevent reuse of a single use device. Conversely, if there is no match with a serial number, the device cannot be used and is locked out from authentication and access of lot information.

To encrypt data for its secure transmission, the text data is transformed into encrypted (cipher) text using a secret key and an encryption algorithm. Without knowing the encryption algorithm and the secret key, it is impossible to recreate the transmission data from the cipher data. The cipher data is transformed into its original form in the receiver using the secret key and the encryption algorithm. Encryption techniques include private key cryptography and public key cryptography that prevent illegal access to internal information in the memory on the memory chip.

If it is determined that the disposable component 101 is not authenticated, then, at block 515, the disposable component 101 has a failure. If there is a failure with the disposable component 101, then the user is warned that the disposable component 101 does not appear to be authenticated or genuine and should be investigated. A failure can (1) generate a visual or audible alarm, (2) send a message to the data-base provider; (3) halt execution of the process. However, if the disposable component 101 is authenticated and has passed, at block 517, then the operation is allowed. If it is allowed, then the disposable component 101 is genuine and the performance of the task is genuine. By ensuring that only approved disposable components 101 are used, there is a reduction in the liability that a counterfeit poor quality disposable component 101 is used on the hardware and a user files an unjustified complaint or those processes which were not granted export use license by government authorities are prohibited.

Next, at block 519, user critical digital data at the disposable component 101 is released, and the process ends. The disposable component 101 will also allow users to access manufacturing information about the product (e.g., lot number, manufacturing data, release specifications, etc.). This data would only be available if the card reader 106 was able to verify that the RFID tag 102 was authentic and genuine. This user critical data will be displayed on the computer 109, which also may be connected to a printer to print this release data, for example.

### Example Bioprocess and/or Other Sterile Product Tagging and Inventory Management Systems and Methods

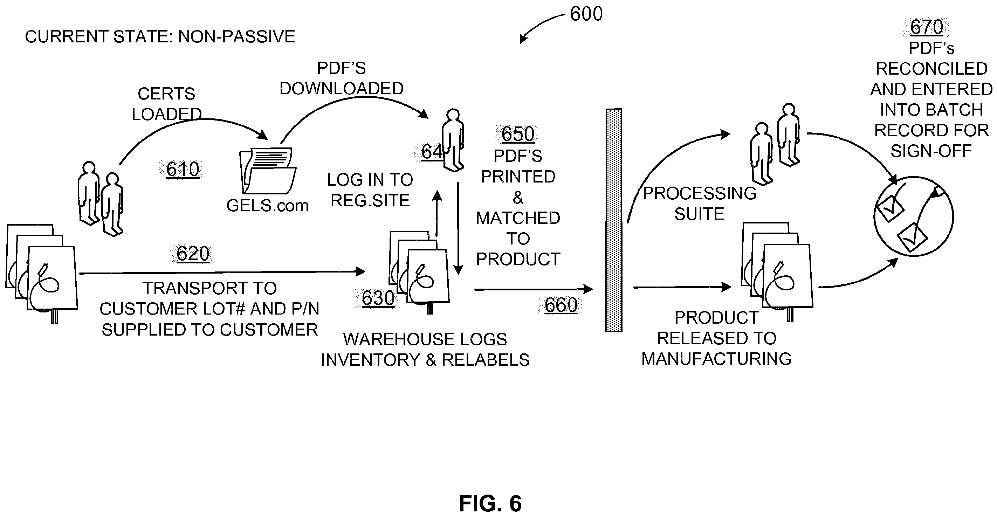

As shown in the example of FIG. 6, a prior product inventory tracking and data workflow and infrastructure 600 is a very manual process requiring much user intervention. The example process 600 enables users to manage inventory and align documentation with products in a very manual process. At 610, a user uploads certificates associated with a product into a database such as a regulatory website database. At 620, product is transported to a customer warehouse and/or other storage facility with lot number and part number provided. At 630, inventory is logged and the product is relabeled at the customer warehouse and/or other storage facility. At 640, a user logs in to the regulatory website and downloads file(s) (e.g., portable document format (PDF) files, etc.) for the product. At 650, the file(s) are printed and matched to the product. For example, a user prints the PDF and matches it to information on the product at the warehouse. At 660, the product is released to manufacturing. At 670, the PDF(s) are reconciled with the released product and entered into a batch record for sign-off/approval. Once approved by a user, the product can be released for use. Products can be assigned to one or more client processes, for example.

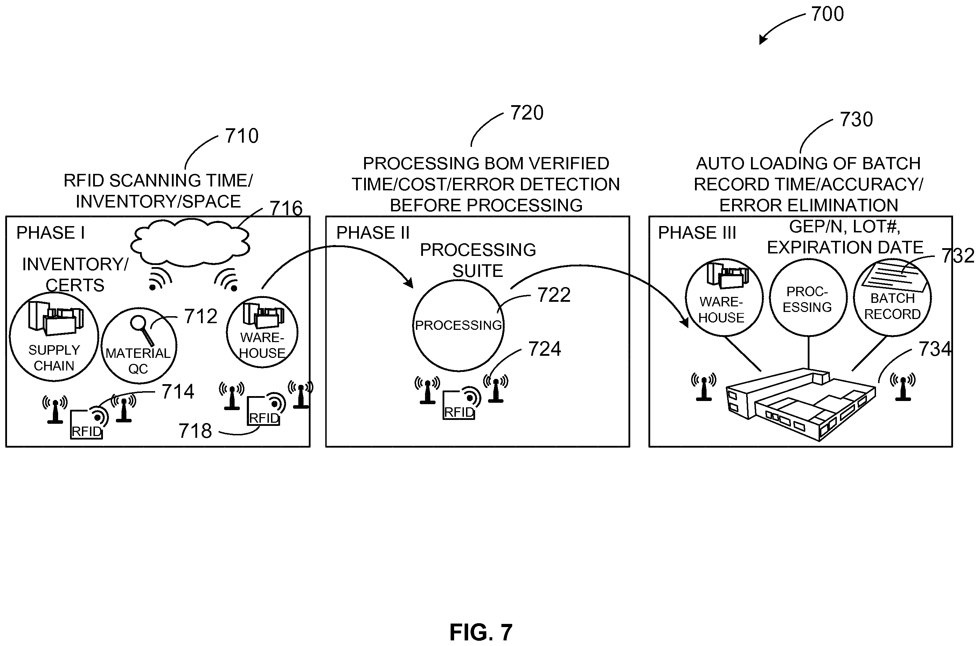

Certain examples provide an example bioprocess and/or other sterile product inventory management system 700, such as shown in FIG. 7. The example system 700 includes three primary components: a writeable RFID ultra-high frequency (UHF) tag, a cloud-based server, and software that combines two way data transmission to and from a customer system. The example of FIG. 3 shows three distinct segments that can be addressed in a phased approach to deploy a bioprocess product. A first phase 710 addresses an incoming supply of product to a customer's warehouse. Timing, inventor, and used space can be monitored and managed via RFID scanning, for example.

At 710, scanning the product 712 with valid RFID information 714 is logged, and an uplink to a cloud-based provider server 716 can be initiated and includes a part and/or lot number scan with incoming stock. Transmission of stored certificates from the cloud server 716 (e.g., preloaded once product has shipped) and confirmation of shipment delivery can be logged. A customer inventory position can also be updated. Information can be written to the RFID chip or tag 714. For example, an internal part number can be added while retaining the manufacturer's information, thus eliminating the need to help ensure reliability by keeping traceable information archived. Instead, information can be built into the RFID 714. The warehouse can include one or more antenna 718 to scan and identify the product 712 entering and/or leaving the warehouse, for example.

Once inventory is moved from the warehouse, the cloud system 716 is updated. If a safety stock level has been reached, an automatic order to the supplier cloud system 716 can be initiated to help ensure sufficient levels of supply on hand. A second phase 720 moves from the warehouse to a processing suite 722. At 720, time, cost, and error detection can be evaluated before processing a bill of materials and/or other product information. For example, an entry point antenna 724 scans the parts, compares a standard operating procedure (SOP) bill of materials (BOM), and verifies complete quantity(-ies) and identity(-ies) of materials within the suite 722. Confirmation of the BOM is displayed on a monitor associated with the processing suite 722, for example.

In a third phase 730, the product used in the process is automatically uploaded to a batch record 732. The upload/update to the batch record 732 completes the product life cycle via a CFR Part 11 compliant software module at a data center 734. At 730, the batch record 732 is automatically loaded, and timing, accuracy, and error elimination of the batch record with respect to the product is facilitated based on part number, lot number, expiration date, and/or other information embedded in the RFID.

Thus, in certain examples, improved access to data and inventory can be provided with an RFID-based solution combined with a secure cloud-based transactional system. The elimination of manual processes, such as data retrieval, from a provider and/or physical inventory counts improve workflow and accuracy and responsiveness of materials tracking and inventory management. Automatic issuing of orders to a supplier and predictable delivery forecasting are also among the benefits provided by the examples disclosed and described herein.

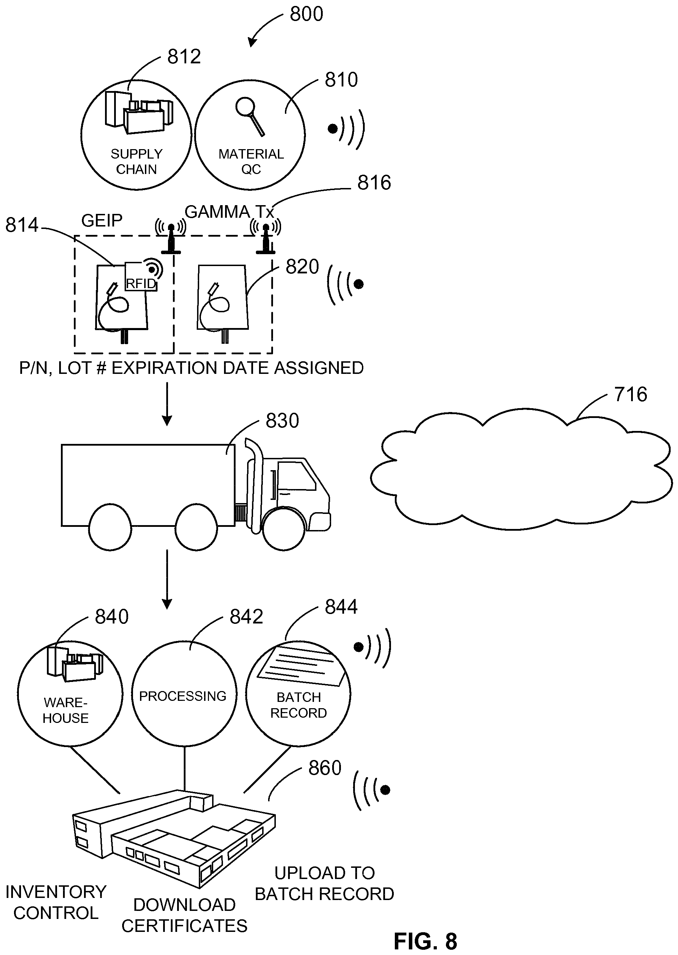

FIG. 8 illustrates an example process 800 to generate, track, and manage single-use consumables such as single-use bags, chromatographic resins, other single-use consumables, etc., with an RFID tag/cloud-based system. For example, single-use consumables 810 are manufactured via a supply chain 812. Information (e.g., part/lot number, expiration data, identification information, quantity, etc.) is logged onto an RFID chip 814 associated with the consumables 810 before gamma sterilization 816 occurs. Regulatory support files and/or certificates are uploaded to the cloud 716 once a batch of product has been approved by quality control/quality assurance, for example. Product inventory 820 can be logged in and out of the provider warehouse and transported for example by means of lower environmental impact transport 830 to a customer site 840, because customers are more amenable to slower delivery of planned inventory supply.

At the customer site 840, data regarding the product inventory 820 can be processed 842 and passive logged in a batch record 844. For example, a product taken for processing is logged out passively, and inventory information is automatically uploaded by the system to the cloud server 716. Based on the uploaded information, availability of the product can be forecast based on remaining inventory, rate of use, upcoming schedule, etc., to trigger reordering of product to maintain a safe stock level of the product in inventory, for example. The batch record file(s) 844 are loaded with a lot, part number, expiration date, etc., for single-use products.

Building the batch file 844 and processing 842 with the system eliminates information errors in associated documents and enables digitally-driven and managed production and distribution of single-use bioprocess products (e.g., consumables, chromatographic resins, etc.). Inventory control and ordering can be facilitated between customer site and producer via the cloud-based server 716 and passive sensing of RFID information associated with the product(s). Regulatory information (e.g., audit, etc.) and validation documentation can be automatically generated and routed based on part number, lot, etc., associated with the product, for example.

Such apparatus and associated systems and methods enhance a generator's digital capability while reducing customer manual actions and data entry errors. In addition, a business model can be provided that is revenue based for customers utilizing the cloud 716 and needing competitive products. Business revenue, generated by charging competitors, rather than customers, a fee, is obtained through management of the cloud 716 and transactional access.

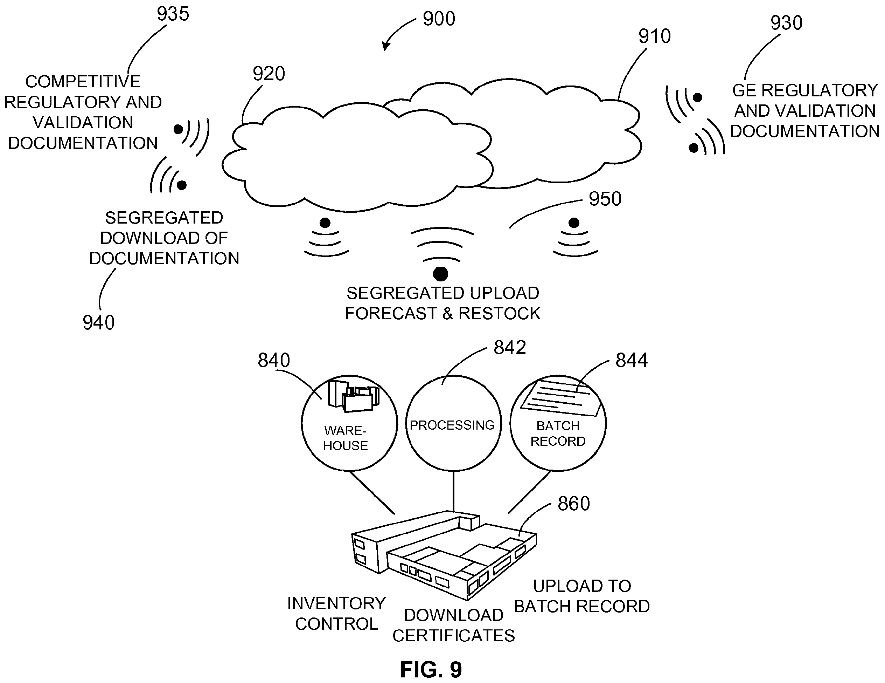

For example, FIG. 9 shows an example infrastructure 900 providing a secure cloud service for biotechnology companies to manage inventory and product documentation and track usage and status of product delivered to customers. A management cloud system 910 manages security of an inventory cloud 920 including encryption of data uploaded to the cloud 920. The management cloud 910 maintains security and up-to-date regulatory and validation documentation/information 930 to be leveraged by the inventory cloud 920. User systems can also upload competitive regulatory and validation documentation/information 935 to the inventory cloud 920 to be leveraged for tracking and inventory management and compliance, for example. Documentation can be searched, segregated, and downloaded from the inventory cloud system 920 to one or more user systems, for example.

At a customer site 860, a warehouse management system 840, processing suite 842, and batch record(s) 844 can be leveraged for inventory control, download of regulatory certificates, update of the batch record(s) 844, etc. Inventory information can be forecast and, via segregated upload 950, provided to the inventory cloud 920 to drive reordering/restocking of one or more products in the inventory, for example. Users of the cloud 920 can be charged a license fee, subscription/other annual fee, etc., to use the inventory cloud system 920 and RFID chip units to provide information to the cloud 920 and receive information from the cloud 920 and/or user device, for example.

Thus, certain examples provide a passive inventory tracking and documentation repository/information portal apparatus that leverages an RFID tag (e.g., a UHF RFID tag, etc.) and an RFID antenna coil to be used with gamma-irradiated single-use bioprocess products and/or other sterile products (referred to as bioprocess products for ease of reference herein). For example, the RFID antenna is configured for "stand off" reading of RFID tags at designated entry/exit node locations of a manufacturing and/or storage facility, warehouse, other client location, etc. The RFID tag is affixed to bioprocess products. Information such as lot number, part number, expiration date, etc., are written to and readable from the RFID tag. A cloud-based repository stores certificates of quality/analysis and regulatory support documentation for the products.

Documentation is loaded on the management cloud 910, transactional data is transferred from the customer site to the inventory cloud 920 which measures inventory levels for automatic reordering of materials. Information can be passively written to batch records 844 in the process suite 842, and information stored on the RFID tag can be verified as well as verification of transmission accuracy from the management cloud 910 to device(s) at the customer site.

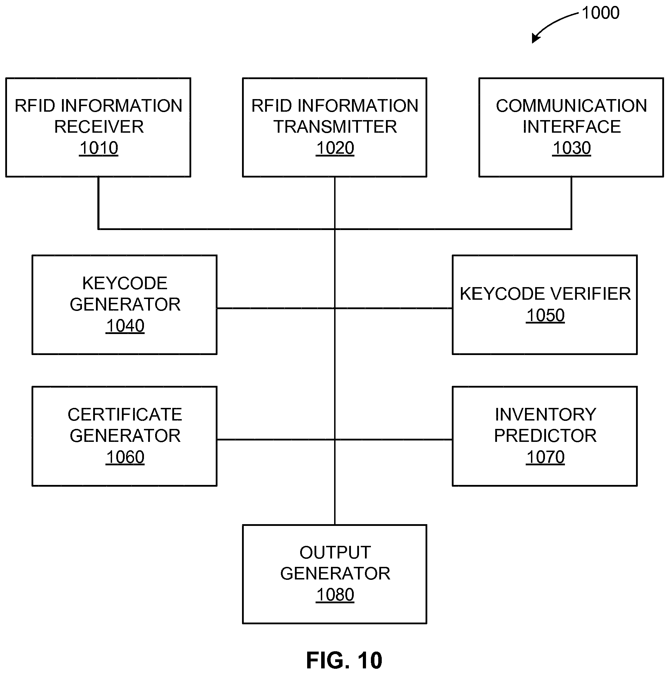

FIG. 10 illustrates an example RFID-driven inventory management system 1000 to drive the management cloud 910 and/or the inventor cloud 920 to interact with locations and RFID tags associated with bioprocess products. The example system 1000 can be implemented using a cloud-based server such as the example cloud server 716, management cloud system 910, etc. The example system 1000 includes an RFID information receiver 1010, and RFID information transmitter 1020, a communication interface 1030, a keycode generator 1040, a keycode verifier 1050, a certificate generator 1060, an inventory predictor 1070, and an order generator 1080. In certain examples, the RFID information receiver 1010, the RFID information transmitter 1020, and the communication interface 1030 are combined and referred to collectively as the communication interface 1030 (e.g., a radiofrequency communication interface, a Bluetooth communication interface, a near field communication interface, a cellular communication interface, other wired/wireless communication interface, etc.).

The example RFID information receiver 1010 receives information from an RFID tag. For example, an antenna 718 at a generation/packaging facility, customer warehouse, etc., scans the RFID tag 714 attached to a product, and information stored on the RFID chip 714 is read and relayed by the antenna 718 to the RFID information receiver 1010. Thus, the RFID information receiver 1010 is provided with information such as lot number, part number, other identifier, expiration date, etc., which can form a keycode for authentication, authorization, lookup of information related to the product (e.g., quality certificate, etc.), and triggering of further action with respect to the product (e.g., reordering of the product for the customer/customer site, etc.), for example.

The RFID information receiver 1010 provides the information to the keycode generator 1040 and/or the keycode verifier 1050. For example, the information extracted from the RFID 714 can be formed into a keycode unique to that product by the keycode generator 1040. The keycode can then be provided to the RFID tag 714 via the RFID information transmitter 1120 and/or provided to a user system (e.g., a local customer information system, other local customer computing device, etc.) via the communication interface 1030, for example. Alternatively, if the information itself is the keycode, then the keycode verifier 1050 can verify the authenticity of the keycode for the product and customer, for example. By verifying the keycode associated with the RFID 714 and its product, certification (e.g., a certificate of quality, etc.) and/or other information such as validation guides, regulatory support documentation, etc., can be provided to the RFID chip 714 and/or a local information system by the certificate generator 1060 via the RFID transmitter 1020 and/or the communication interface 1030, for example. Thus, the customer's local system can determine the authenticity of the product, verify its expiration date, track usage, etc.

By tracking the RFID tag 714 at the customer site using antenna(s) 718, inventory can be proactively managed by the inventory predictor 1070. When the RFID 714 and/or associated information indicates that the product has been used, moved, expired, etc., the predictor 1070 can process available inventory information for that customer/site, using information about the product's useful life (e.g., single-use disposables lasting two years, etc.), and customer usage patterns to determine when the order generator 1080 should generate a refill order for more of the product. For example, the predictor 1070 can include a digital twin of the generator, customer site, warehouse, and/or product, etc., can be formed to model when inventory is likely to run low to cause the predictor 1070 to trigger the order generator 1080 to order additional product and/or a generator to make additional product, etc. In certain examples, the predictor 1070 can include an artificial intelligence model, such as a deep learning network and/or other neural network model, to generate an output to trigger the order generator 1080 to produce more product for the customer's inventory. Thus, the example RFID-driven inventory management system 1000 enables bioprocess products to be tracked, ordered, used, modeled, and otherwise managed using RFID tags, antennas, and cloud-based servers.

While example implementations are illustrated in conjunction with FIGS. 1-10, elements, processes and/or devices illustrated in conjunction with FIGS. 1-10 may be combined, divided, re-arranged, omitted, eliminated and/or implemented in any other way. Further, components disclosed and described herein can be implemented by hardware, machine readable instructions, software, firmware and/or any combination of hardware, machine readable instructions, software and/or firmware. Thus, for example, components disclosed and described herein can be implemented by analog and/or digital circuit(s), logic circuit(s), programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the components is/are hereby expressly defined to include a tangible computer readable storage device or storage disk such as a memory, a digital versatile disk (DVD), a compact disk (CD), a Blu-ray disk, etc. storing the software and/or firmware.

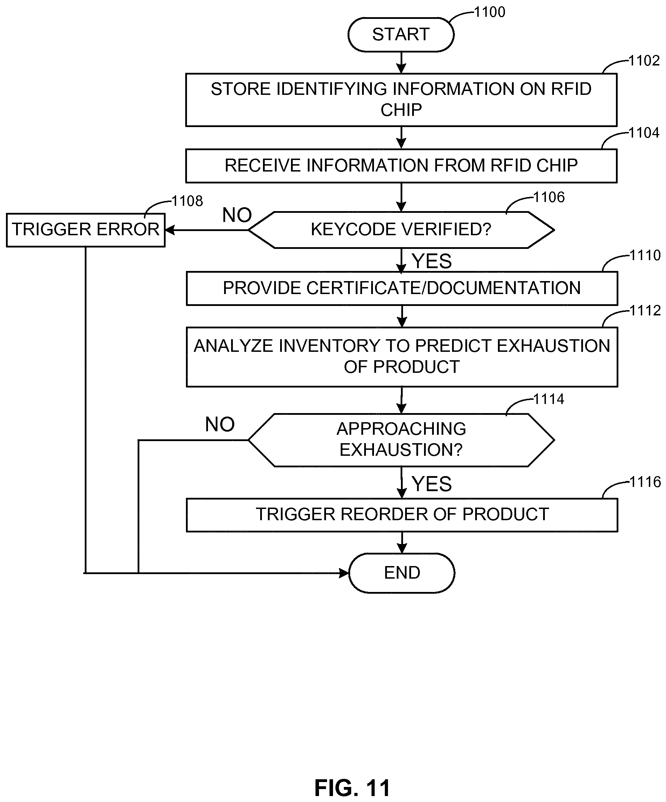

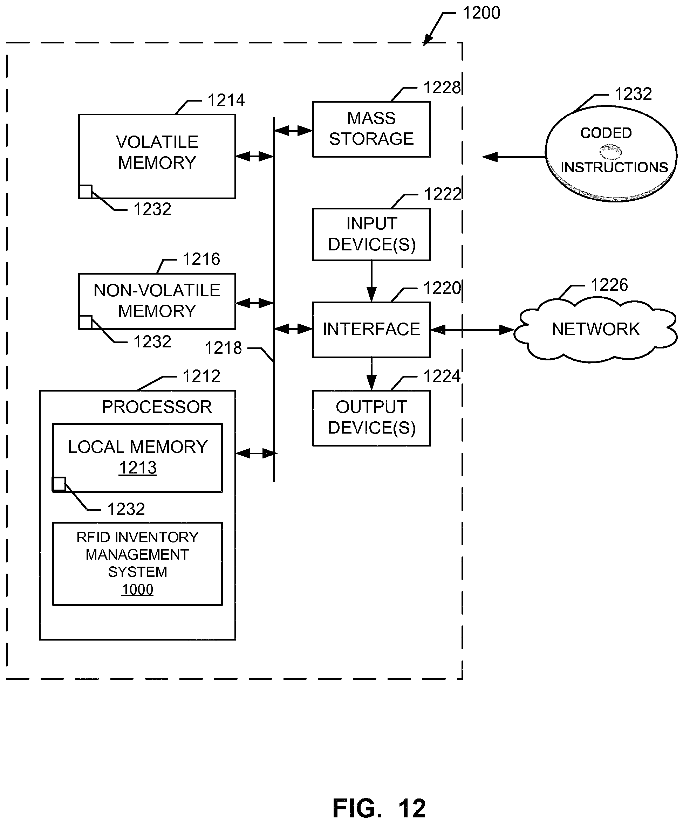

A flowchart representative of example machine readable instructions for implementing components disclosed and described herein are shown in conjunction with at least FIG. 11. In the examples, the machine readable instructions include a program for execution by a processor such as the processor 1212 shown in the example processor platform 1200 discussed below in connection with FIG. 12. The program may be embodied in machine readable instructions stored on a tangible computer readable storage medium such as a CD-ROM, a floppy disk, a hard drive, a digital versatile disk (DVD), a Blu-ray disk, or a memory associated with the processor 1212, but the entire program and/or parts thereof could alternatively be executed by a device other than the processor 1212 and/or embodied in firmware or dedicated hardware. Further, although the example program is described with reference to the flowcharts illustrated in conjunction with at least FIG. 11, many other methods of implementing the components disclosed and described herein may alternatively be used. For example, the order of execution of the blocks may be changed, and/or some of the blocks described may be changed, eliminated, or combined. Although the flowchart of at least FIG. 11 depicts example operations in an illustrated order, these operations are not exhaustive and are not limited to the illustrated order. In addition, various changes and modifications may be made by one skilled in the art within the spirit and scope of the disclosure. For example, blocks illustrated in the flowchart may be performed in an alternative order or may be performed in parallel.

As mentioned above, the example process(es) of at least FIG. 11 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably. Additionally or alternatively, the example process(es) of at leastFIG. 11 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. As used herein, when the phrase "at least" is used as the transition term in a preamble of a claim, it is open-ended in the same manner as the term "comprising" is open ended. In addition, the term "including" is open-ended in the same manner as the term "comprising" is open-ended.

FIG. 11 illustrates a flow diagram of an example method 1100 to manage bioprocess product inventory via a cloud-based platform using RFID tracking and signal information. At block 1102, information identifying an associated bioprocess product is stored on an RFID tag. For example, after manufacture/generation, information such as lot number, part number, type, expiration date, etc., is stored on the RFID tag 714 to identify the single-use disposable bioprocess product associated with the RFID tag 714.

At block 1104, information from the RFID tag is received at a cloud system. For example, the example RFID information receiver 1010 receives information from an RFID tag. For example, an antenna 718 at a generation/packaging facility, customer warehouse, etc., scans the RFID tag 714 attached to a product, and information stored on the RFID chip 714 is read and relayed by the antenna 718 to the RFID information receiver 1010. Thus, the RFID information receiver 1010 is provided with information such as lot number, part number, other identifier, expiration date, etc., which can form a keycode for authentication, authorization, lookup of information related to the product (e.g., quality certificate, etc.), and triggering of further action with respect to the product (e.g., reordering of the product for the customer/customer site, etc.), for example.

At block 1106, the keycode associated with the RFID chip 714 and its disposable product 101 is verified to authenticate the product 101. For example, parameters and/or other information extracted from the RFID 714 can be formed into a keycode unique to that product by the keycode generator 1040. The keycode can then be provided to the RFID tag 714 via the RFID information transmitter 1120 and/or provided to a user system (e.g., a local customer information system, other local customer computing device, etc.) via the communication interface 1030, for example. Alternatively, if the information itself is the keycode, then the keycode verifier 1050 can verify the authenticity of the keycode for the product and customer, for example. If the keycode is not successfully verified, then, at block 1108, an error is triggered indicating a fraudulent product, invalid keycode, unauthorized use, etc.

At block 1110, after the keycode has been verified, a certificate of quality and/or other documentation (e.g., regarding installation, configuration, use, ordering, etc.) can be provided. For example, by verifying the keycode associated with the RFID 714 and its product, certification (e.g., a certificate of quality, etc.) and/or other information can be provided to the RFID chip 714 and/or a local information system by the certificate generator 1060 via the RFID transmitter 1020 and/or the communication interface 1030, for example. Thus, the cloud system provides certification of the product to the local customer system once the keycode from the RFID chip has been verified as legitimate and associated with that product. The customer's local system can determine the authenticity of the product, verify its expiration date, track usage, etc.

At block 1112, inventory including the product is analyzed to predict and/or otherwise determine whether the inventory of the product is approaching exhaustion. That is, by tracking the RFID tag 714 at the customer site using antenna(s) 718, inventory can be proactively managed by the inventory predictor 1070. When the RFID 714 and/or associated information indicates that the product has been used, moved, expired, etc., the predictor 1070 can process available inventory information for that customer/site, using information about the product's useful life (e.g., single-use disposables lasting two years, etc.), and customer usage patterns to determine when the order generator 1080 should generate a refill order for more of the product. For example, the predictor 1070 can include a digital twin of the generator, customer site, warehouse, and/or product, etc., can be formed to model when inventory is likely to run low to cause the predictor 1070 to trigger the order generator 1080 to order additional product and/or a generator to make additional product, etc. In certain examples, the predictor 1070 can include an artificial intelligence model, such as a deep learning network and/or other neural network model, to generate an output to trigger the order generator 1080 to produce more product for the customer's inventory.

At block 1114, the prediction is evaluated to determine whether the product is approaching exhaustion. That is, the prediction is reviewed to determine whether the inventory has or will soon use all of the product. If so, then, at block 1116, a reorder of the product is triggered for the customer site. Thus, the example RFID-driven inventory management system 1000 enables bioprocess products to be tracked, ordered, used, modeled, and otherwise managed using RFID tags, antennas, and cloud-based servers.

FIG. 12 is a block diagram of an example processor platform 1200 structured to executing the instructions of at least FIG. 11 to implement the example components disclosed and described herein with respect to FIGS. 1-10. The processor platform 800 can be, for example, a server, a personal computer, a mobile device (e.g., a cell phone, a smart phone, a tablet such as an iPad^{™}), a personal digital assistant (PDA), an Internet appliance, or any other type of computing device.

The processor platform 1200 of the illustrated example includes a processor 1212. The processor 1212 of the illustrated example is hardware. For example, the processor 1212 can be implemented by integrated circuits, logic circuits, microprocessors or controllers from any desired family or manufacturer.

The processor 1212 of the illustrated example includes a local memory 1213 (e.g., a cache). The example processor 1212 of FIG. 12 executes the instructions of at least FIG. 11 to implement the systems and infrastructure and associated methods of FIGS. 1-10 such as the example cloud system 716, management cloud 910, inventory cloud 920, processing suite 842, RFID-driven inventory management system 1000, or, more generally, the example system 800, 900, 1000, etc. The processor 1212 of the illustrated example is in communication with a main memory including a volatile memory 1214 and a non-volatile memory 1216 via a bus 1218. The volatile memory 1214 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1216 may be implemented by flash memory and/or any other desired type of memory device. Access to the main memory 1214, 1216 is controlled by a clock controller.

The processor platform 1200 of the illustrated example also includes an interface circuit 1220. The interface circuit 1220 may be implemented by any type of interface standard, such as an Ethernet interface, a universal serial bus (USB), and/or a PCI express interface.

In the illustrated example, one or more input devices 1222 are connected to the interface circuit 1220. The input device(s) 1222 permit(s) a user to enter data and commands into the processor 1212. The input device(s) can be implemented by, for example, a sensor, a microphone, a camera (still or video), a keyboard, a button, a mouse, a touchscreen, a track-pad, a trackball, isopoint and/or a voice recognition system.

One or more output devices 1224 are also connected to the interface circuit 1220 of the illustrated example. The output devices 1224 can be implemented, for example, by display devices (e.g., a light emitting diode (LED), an organic light emitting diode (OLED), a liquid crystal display, a cathode ray tube display (CRT), a touchscreen, a tactile output device, and/or speakers). The interface circuit 1220 of the illustrated example, thus, typically includes a graphics driver card, a graphics driver chip or a graphics driver processor.

The interface circuit 1220 of the illustrated example also includes a communication device such as a transmitter, a receiver, a transceiver, a modem and/or network interface card to facilitate exchange of data with external machines (e.g., computing devices of any kind) via a network 1226 (e.g., an Ethernet connection, a digital subscriber line (DSL), a telephone line, coaxial cable, a cellular telephone system, etc.).

The processor platform 1200 of the illustrated example also includes one or more mass storage devices 1228 for storing software and/or data. Examples of such mass storage devices 1228 include floppy disk drives, hard drive disks, compact disk drives, Blu-ray disk drives, RAID systems, and digital versatile disk (DVD) drives.

The coded instructions 1232 of FIG. 12 may be stored in the mass storage device 1228, in the volatile memory 1214, in the non-volatile memory 1216, and/or on a removable tangible computer readable storage medium such as a CD or DVD.

From the foregoing, it will be appreciated that the above disclosed methods, apparatus, and articles of manufacture have been disclosed to implement an RFID-driven inventory management system. The disclosed methods, apparatus and articles of manufacture improve the operation of a local customer system and inventory management. The disclosed methods, apparatus and articles of manufacture are accordingly directed to one or more improvement(s) in the functioning of a computer and/or computing device and its interaction with RFID technology.

Thus, certain examples deploy and utilize RFIDs to enable inventory management. Single-use disposables are pre-sterilized and have shelf life of two years, for example, after which they must be scrapped. Single-use consumables/disposables including biotherapeutics, radiopharmaceuticals, etc. Bioprocessing involves producing biotherapeutics and/or other products. Bioprocessing involves linkage and utilization of single-use components that, once used or assembled, cannot be disassembled or reused. Rather than passive or manual data entry, certain examples facilitate active inventory management using RFID chips and antennas. Certain examples provide a first-in, first-out arrangement for a customer to know what products are on their shelves. Inventory management information can be determined for a customer so that the customer and/or the provider know when the inventory reaches a minimum level to trigger building and restocking of the product for the inventory.

When a product arrives at a customer site, rather than packaging a certificate of quality with the product, a certificate of quality can be loaded in the cloud. When the product is received at the customer site, a keycode is associated with the product. For example, parameters form a keycode associated with RFID circuitry (e.g., an RFID tag/chip) of the product to allow the certificate of quality to automatically be downloaded from the cloud to a local customer system and/or other local customer computing device (e.g., a server, a workstation, a tablet, a smartphone, etc.). Using the RFID circuit and interacting with the cloud-based server, a customer system is provided with real-time, predictive inventory management to help ensure that the customer site has the consumable products needed and combination of items for effective patient care. The system knows what the customer site has and what is needed before processing begins in the processing suite. A serial number/part number, batch number/lot number, etc., can be automatically provided from the RFID circuit to a local and/or remote system as soon as the product passes through the door past antenna(s) positioned with respect to a loading dock and/or other entrance to the customer site, for example.

Thus, certain examples provide inventory control to send and receive information between the RFID circuitry and a cloud system to help ensure relevant, current, accurate information is available to load and process a batch record. RFID circuits are provided which are resistant to gamma radiation and maintain stored values despite potential corruption from the radiation. Monitoring and inventory management can occur across customer sites to manage an entire inventory, for example. In certain examples, information can be aggregated and processed into a dashboard to display inventory management results and provide an ability to data mine the aggregated information to establish customer usage patterns, rates, etc., for one or more consumables. In certain examples, data mining and modeling can be used to predict when a product is likely to run out and should be replenished. Historical data can be analyzed, such as with respect to a digital twin or other model, etc., and/or a prediction can be made via machine learning and/or other artificial intelligence, etc.

Certain examples leverage RFID chips with finite storage capacity, augmented by the cloud-based server to verify and trigger exchange of additional information between the cloud system and a local customer system. Using a key code (e.g., a part number, lot number, expiration date, and/or signature, etc.), download of additional information (e.g., certification, documentation, configuration, etc.) can be provided from the cloud to the local system.

In certain examples, efficient, timely, and low environmental impact delivery methods of gamma sterilized disposable bioprocessed components RFID tagged inventory can be realized through accurate forecast information combined with acquired data relating to utilization rates. Transportation for delivery has proven to be the largest contributor of energy utilization in carbon footprint life cycle assessment studies focused on the disposable bioprocess components. Bioprocessing components are conventional shipped via multiple modes, with air and internal combustion engine powered trucks being the most common. Air transport of such components due to last- minute ordering resulting from poor forecasting is the most inefficient means of delivery, and also results in the majority of associated transportation carbon footprint. In this invention, the use of warehouse facilities near the components' point of use while using reduced carbon footprint transportation modes, such as trains or ship transport, are facilitated by data mined forecasting data obtained with RFID tagged components described above. Such forecasting permits prestaging of the inventory through eco-friendly transport; thereby, reducing the carbon footprint and elimination of just in time delivery via aircraft.

Although certain example methods, apparatus and articles of manufacture have been described herein, the scope of coverage of this patent is not limited thereto. On the contrary, this patent covers all methods, apparatus and articles of manufacture fairly falling within the scope of the appended claims of this patent.

## Claims

1. A radiofrequency identification-driven bioprocess inventory management system (1000) comprising:
a cloud-based server (716) including a processor (1212) to implement at least:
a communication interface (1030) to receive a first message from a radiofrequency identification circuit (201a, 201b) via an antenna (718) at a first location, the first message to include a keycode to identify a disposable sterile product associated with the radiofrequency identification circuit (201a, 201b), said radiofrequency identification circuit (201a, 201b) being a component of a RFID tag (102) that is gamma radiation resistant to levels required for pharmaceutical processing;
a keycode verifier (1050) to verify the keycode as authentic and associated with the product;
a certificate generator (1060) to provide, when the keycode is verified as authentic and associated with the product, a certificate of quality for the product, the certificate to be sent from the cloud-based server (716) in a second message to a local computing device at the first location to enable use of the product;
an inventory predictor (1070) to predict, based on an identification of the product and usage information for the product and a tracked customer usage pattern thereof at the first location, an exhaustion of the product at the first location using an artificial intelligence model; and
an output generator (1080) to trigger an order of the product when the exhaustion of the product at the first location is predicted by said inventory predictor (1070).

2. The system (1000) of claim 1, wherein the keycode is to be formed from a serial number embedded in the radiofrequency identification circuit (201a, 201b).

3. The system (1000) of claim 1 or 2, wherein the certificate generator (1060) is to provide the certificate of quality to a computing device at the first location.

4. The system (1000) of any preceding claim, wherein the inventory predictor (1070) is to include a digital twin of the first location to model operation of the first location and use of the product at the first location.

5. The system (1000) of any preceding claim, wherein the inventory predictor (1070) is to include a machine learning model to process information regarding the product and the first location to generate a prediction of timing for exhaustion of the product at the first location.

6. The system (1000) of any preceding claim, wherein the cloud-based server (716) is to be implemented on at least one of a management cloud system or an inventory cloud.

7. The system (1000) of any preceding claim, wherein the radiofrequency identification circuit (201a, 201b) is a gamma radiation-resistant circuit to be integrated with a container (101) holding the product.

8. The system (1000) of any preceding claim, wherein: i) the RFID tag (102) is gamma radiation resistant to 25 to 50 kGy; and/or ii) gamma radiation resistance is provided by one or more of: a) storage of required digital information that allows its error correction; b) use of radiation-hardened CMOS circuitry on the RFID tag (102) or from control of recovery of a standard CMOS after gamma irradiation; c) use of FRAM memory; and/or d) reading of the RFID tag (102) after gamma irradiation with different power levels of a reader (106) or at different distances between the reader (106) and the RFID tag (102).

9. A method for bioprocess inventory management for use by a system (1000) of any preceding claim comprising:
receiving, by executing an instruction using at least one processor (1212), a first message from a radiofrequency identification circuit (201a, 201b) via an antenna (718) at a first location, the first message to include a keycode to identify a disposable sterile product associated with the radiofrequency identification circuit (201a, 201b), said radiofrequency identification circuit (201a, 201b) being a component of a RFID tag (102) that is gamma radiation resistant to levels required for pharmaceutical processing;
verifying, by executing an instruction using the at least one processor (1212), the keycode as authentic and associated with the product;
providing, by executing an instruction using the at least one processor (1212) when the keycode is verified as authentic and associated with the product, a certificate of quality for the product, the certificate to be sent from the cloud-based server (716) in a second message to a local computing device at the first location to enable use of the product;
predict, based on an identification of the product and usage information for at least one of the product or the first location by executing an instruction using the at least one processor (1212), an exhaustion of the product at the first location; and
triggering, by executing an instruction using the at least one processor (1212), an order of the product when the exhaustion of the product at the first location is predicted.

10. The method of claim 9, wherein the keycode is to be formed from a serial number embedded in the radiofrequency identification circuit (201a, 201b).

11. The method of claim 9 or 10, wherein the certificate of quality is to be provided to a computing device at the first location.

12. The method of any of claims 9 to 11, wherein predicting exhaustion of the product at the first location is to include modeling, using a digital twin of the first location, operation of the first location and use of the product at the first location.

13. The method of any of claims 9 to 12, wherein predicting exhaustion of the product at the first location is to include processing, using a machine learning model, information regarding the product and the first location to generate a prediction of timing for exhaustion of the product at the first location.

14. The method of any of claims 9 to 13, wherein the at least one processor (1212) is to be implemented on at least one of a management cloud system or an inventory cloud.

15. A computer-readable storage medium including instructions which, when executed, cause at least one processor (1212) to at least implement the method according to any of claims 9 to 14.

## Patentansprüche

1. Radiofrequenzidentifikationsgesteuertes Bioprozess-Inventarverwaltungssystem (1000), umfassend:
einen cloudbasierten Server (716), der einen Prozessor (1212) einschließt, um mindestens Folgendes auszuführen:
eine Kommunikationsschnittstelle (1030) zum Empfangen einer ersten Nachricht von einer Radiofrequenzidentifikationsschaltung (201a, 201b) über eine Antenne (718) an einem ersten Standort, wobei die erste Nachricht einen Schlüsselcode einschließt, um ein steriles Einwegprodukt zu identifizieren, das mit der Radiofrequenzidentifikationsschaltung (201a, 201b) assoziiert ist, wobei die Radiofrequenzidentifikationsschaltung (201a, 201b) eine Komponente eines RFID-Tags (102) ist, das gegenüber Gammastrahlung bis zu für eine pharmazeutische Verarbeitung erforderlichen Niveaus beständig ist;
einen Schlüsselcodeverifizierer (1050) zum Verifizieren des Schlüsselcodes als authentisch und dem Produkt zugeordnet;
einen Zertifikatsgenerator (1060) zum Bereitstellen, wenn der Schlüsselcode als authentisch verifiziert ist und dem Produkt zugeordnet ist, eines Qualitätszertifikats für das Produkt, wobei das Zertifikat von dem cloudbasierten Server (716) in einer zweiten Nachricht an eine lokale Rechenvorrichtung an dem ersten Standort gesendet wird, um die Verwendung des Produkts zu ermöglichen;
einen Bestandsprädiktor (1070) zum Vorhersagen, basierend auf einer Identifizierung des Produkts und Nutzungsinformationen für das Produkt und einem verfolgten Kundenverwendungsmuster davon an dem ersten Standort, eines Aufbrauchens des Produkts an dem ersten Standort unter Verwendung eines Modells der künstlichen Intelligenz; und
einen Ausgabegenerator (1080) zum Auslösen einer Bestellung des Produkts, wenn das Aufbrauchen des Produkts an dem ersten Standort durch den Bestandsprädiktor (1070) vorhergesagt wird.

2. System (1000) nach Anspruch 1, wobei der Schlüsselcode aus einer in die Radiofrequenzidentifikationsschaltung (201a, 201b) eingebetteten Seriennummer gebildet wird.

3. System (1000) nach Anspruch 1 oder 2, wobei der Zertifikatsgenerator (1060) das Qualitätszertifikat an eine Rechenvorrichtung an dem ersten Standort bereitzustellen ist.

4. System (1000) nach einem der vorstehenden Ansprüche, wobei der Bestandsprädiktor (1070) einen digitalen Zwilling des ersten Standorts einschließt, um den Betrieb des ersten Standorts und die Verwendung des Produkts an dem ersten Standort zu modellieren.

5. System (1000) nach einem der vorstehenden Ansprüche, wobei der Bestandsprädiktor (1070) ein Machine-Learning-Modell einschließt, um Informationen bezüglich des Produkts und des ersten Standorts zu verarbeiten, um eine Vorhersage eines Zeitpunkts des Aufbrauchens des Produkts an dem ersten Standort zu erzeugen.

6. System (1000) nach einem der vorstehenden Ansprüche, wobei der cloudbasierte Server (716) auf mindestens einem von einem Management-Cloud-System oder einer Inventar-Cloud implementiert ist.

7. System (1000) nach einem der vorstehenden Ansprüche, wobei die Radiofrequenzidentifikationsschaltung (201a, 201b) eine gegen Gammastrahlung beständige Schaltung ist, die dazu eingerichtet ist, mit einem das Produkt enthaltenden Behälter (101) integriert zu werden.

8. System (1000) nach einem der vorstehenden Ansprüche, wobei: i) der RFID-Tag (102) gegenüber Gammastrahlung bis zu 25 bis 50 kGy beständig ist; und/oder ii) die Gammastrahlungsbeständigkeit durch eines oder mehrere der folgenden bereitgestellt wird: a) Speicherung erforderlicher digitaler Informationen, die deren Fehlerkorrektur ermöglichen; b) Verwendung strahlungsgehärteter CMOS-Schaltungen auf dem RFID-Tag (102) oder durch Steuerung einer Wiederherstellung eines Standard-CMOS nach Gammabestrahlung; c) Verwendung von FRAM-Speicher; und/oder d) Auslesen des RFID-Tags (102) nach Gammabestrahlung mit unterschiedlichen Leistungspegeln eines Lesegeräts (106) oder bei unterschiedlichen Abständen zwischen dem Lesegerät (106) und dem RFID-Tag (102).

9. Verfahren zur Bioprozess-Inventarverwaltung zur Verwendung durch ein System (1000) nach einem der vorstehenden Ansprüche, umfassend:
Empfangen, durch Ausführen einer Anweisung unter Verwendung von zumindest einem Prozessor (1212), einer ersten Nachricht von einer Radiofrequenzidentifikationsschaltung (201a, 201b) über eine Antenne (718) an einem ersten Standort, wobei die erste Nachricht einen Schlüsselcode einschließt, um ein steriles Einwegprodukt zu identifizieren, das der Radiofrequenzidentifikationsschaltung (201a, 201b) zugeordnet ist, wobei die Radiofrequenzidentifikationsschaltung (201a, 201b) eine Komponente eines RFID-Tags (102) ist, das gegenüber Gammastrahlung bis zu für eine pharmazeutische Verarbeitung erforderlichen Niveaus beständig ist;
Verifizieren, durch Ausführen einer Anweisung unter Verwendung des zumindest einen Prozessors (1212), des Schlüsselcodes als authentisch und dem Produkt zugeordnet;
Bereitstellen, durch Ausführen einer Anweisung unter Verwendung des zumindest einen Prozessors (1212), eines Qualitätszertifikats für das Produkt, wenn der Schlüsselcode als authentisch verifiziert ist und dem Produkt zugeordnet ist, wobei das Zertifikat von dem cloudbasierten Server (716) in einer zweiten Nachricht an eine lokale Rechenvorrichtung an dem ersten Standort gesendet wird, um die Verwendung des Produkts zu ermöglichen;
Vorhersagen, basierend auf einer Identifizierung des Produkts und Nutzungsinformationen für zumindest eines von dem Produkt oder dem ersten Standort, eines Aufbrauchens des Produkts an dem ersten Standort durch Ausführen einer Anweisung unter Verwendung des zumindest einen Prozessors (1212); und
Auslösen, durch Ausführen einer Anweisung unter Verwendung des zumindest einen Prozessors (1212), einer Bestellung des Produkts, wenn das Aufbrauchen des Produkts an dem ersten Standort vorhergesagt wird.

10. Verfahren nach Anspruch 9, wobei der Schlüsselcode aus einer in der Radiofrequenzidentifikationsschaltung (201a, 201b) eingebetteten Seriennummer gebildet wird.

11. Verfahren nach Anspruch 9 oder 10, wobei das Qualitätszertifikat an eine Rechenvorrichtung an dem ersten Standort bereitgestellt wird.

12. Verfahren nach einem der Ansprüche 9 bis 11, wobei das Vorhersagen des Aufbrauchens des Produkts an dem ersten Standort das Modellieren des Betriebs des ersten Standorts und der Verwendung des Produkts an dem ersten Standort unter Verwendung eines digitalen Zwillings des ersten Standorts einschließt.

13. Verfahren nach einem der Ansprüche 9 bis 12, wobei das Vorhersagen des Aufbrauchens des Produkts an dem ersten Standort das Verarbeiten von Informationen bezüglich des Produkts und des ersten Standorts unter Verwendung eines Machine-Learning-Modells einschließt, um eine Vorhersage eines Zeitpunkts des Aufbrauchens des Produkts an dem ersten Standort zu erzeugen.

14. Verfahren nach einem der Ansprüche 9 bis 13, wobei der zumindest eine Prozessor (1212) auf mindestens einem Management-Cloud-System oder einer Inventar-Cloud implementiert ist.

15. Computerlesbares Speichermedium, das Anweisungen einschließt, die bei Ausführung zumindest einen Prozessor (1212) veranlassen, zumindest das Verfahren nach einem der Ansprüche 9 bis 14 auszuführen.

## Revendications

1. Système de gestion des stocks de bioprocédé entraîné par identification par radiofréquence (1000) comprenant :
un serveur en nuage (716) incluant un processeur (1212) pour mettre en œuvre au moins :
une interface de communication (1030) pour recevoir un premier message provenant d'un circuit d'identification par radiofréquence (201a, 201b) via une antenne (718) à un premier emplacement, le premier message devant inclure un code clé pour identifier un produit stérile à usage unique associé au circuit d'identification par radiofréquence (201a, 201b), ledit circuit d'identification par radiofréquence (201a, 201b) étant un composant d'une étiquette RFID (102) qui est résistante aux rayonnements gamma à des niveaux requis pour le traitement pharmaceutique ;
un vérificateur de code clé (1050) pour vérifier le code clé comme authentique et associé au produit ;
un générateur de certificat (1060) pour fournir, lorsque le code clé est vérifié comme authentique et associé au produit, un certificat de qualité pour le produit, le certificat devant être envoyé depuis le serveur en nuage (716) dans un deuxième message à un dispositif informatique local au premier emplacement pour permettre l'utilisation du produit ;
un prédicteur d'inventaire (1070) pour prédire, sur la base d'une identification du produit et d'informations d'utilisation pour le produit et d'un profil d'utilisation dudit produit par le client suivi au premier emplacement, un épuisement du produit au premier emplacement en utilisant un modèle d'intelligence artificielle ; et
un générateur de sortie (1080) pour déclencher une commande du produit lorsque l'épuisement du produit au premier emplacement est prédit par ledit prédicteur d'inventaire (1070).

2. Système (1000) selon la revendication 1, dans lequel le code clé doit être formé à partir d'un numéro de série incorporé dans le circuit d'identification par radiofréquence (201a, 201b).

3. Système (1000) selon la revendication 1 ou la revendication 2, dans lequel le générateur de certificat (1060) doit fournir le certificat de qualité à un dispositif informatique au premier emplacement.

4. Système (1000) selon une quelconque revendication précédente, dans lequel le prédicteur d'inventaire (1070) doit inclure un jumeau numérique du premier emplacement pour modéliser le fonctionnement du premier emplacement et l'utilisation du produit au premier emplacement.

5. Système (1000) selon une quelconque revendication précédente, dans lequel le prédicteur d'inventaire (1070) doit inclure un modèle d'apprentissage automatique pour traiter des informations concernant le produit et le premier emplacement pour générer une prédiction de moment pour l'épuisement du produit au premier emplacement.

6. Système (1000) selon une quelconque revendication précédente, dans lequel le serveur basé sur le cloud (716) doit être mis en œuvre sur au moins l'un d'un système de nuage de gestion ou d'un nuage d'inventaire.

7. Système (1000) selon une quelconque revendication précédente, dans lequel le circuit d'identification par radiofréquence (201a, 201b) est un circuit résistant aux rayonnements gamma devant être intégré avec un récipient (101) contenant le produit.

8. Système (1000) selon une quelconque revendication précédente, dans lequel : i) l'étiquette RFID (102) est résistante aux rayonnements gamma à 25 à 50 kGy ; et/ou ii) la résistance aux rayonnements gamma est assurée par un ou plusieurs des éléments suivants : a) stockage des informations numériques requises qui permet leur correction d'erreur ; b) utilisation d'une circuiterie CMOS durcie aux rayonnements sur l'étiquette RFID (102) ou à partir du contrôle de la récupération d'un circuit CMOS standard après irradiation gamma ; c) utilisation d'une mémoire FRAM ; et/ou d) lecture de l'étiquette RFID (102) après irradiation gamma avec différents niveaux de puissance d'un lecteur (106) ou à différentes distances entre le lecteur (106) et l'étiquette RFID (102).

9. Procédé de gestion des stocks de bioprocédé pour être utilisé par un système (1000) selon une quelconque revendication précédente comprenant les étapes consistant à :
recevoir, en mettant en œuvre une instruction en utilisant au moins un processeur (1212), un premier message provenant d'un circuit d'identification par radiofréquence (201a, 201b) via une antenne (718) à un premier emplacement, le premier message devant inclure un code clé pour identifier un produit stérile à usage unique associé au circuit d'identification par radiofréquence (201a, 201b), ledit circuit d'identification par radiofréquence (201a, 201b) étant un composant d'une étiquette RFID (102) qui est résistante aux rayonnements gamma à des niveaux requis pour le traitement pharmaceutique ;
vérifier, en mettant en œuvre une instruction utilisant le au moins un processeur (1212), le code clé comme authentique et associé au produit ;
fournir, en mettant en œuvre une instruction utilisant le au moins un processeur (1212) lorsque le code clé est vérifié comme authentique et associé au produit, un certificat de qualité pour le produit, le certificat devant être envoyé depuis le serveur basé sur le cloud (716) dans un deuxième message à un dispositif informatique local au premier emplacement pour permettre l'utilisation du produit ;
prédire, sur la base d'une identification du produit et d'informations d'utilisation pour au moins un du produit ou du premier emplacement en mettant en œuvre une instruction utilisant le au moins un processeur (1212), un épuisement du produit au premier emplacement ; et
déclencher, en mettant en œuvre une instruction en utilisant le au moins un processeur (1212), une commande du produit lorsque l'épuisement du produit au premier emplacement est prédit.

10. Procédé selon la revendication 9, dans lequel le code clé doit être formé à partir d'un numéro de série incorporé dans le circuit d'identification par radiofréquence (201a, 201b).

11. Procédé selon la revendication 9 ou la revendication 10, dans lequel le certificat de qualité doit être fourni à un dispositif informatique au premier emplacement.

12. Procédé selon l'une quelconque des revendications 9 à 11, dans lequel la prédiction de l'épuisement du produit au premier emplacement doit inclure la modélisation, en utilisant un jumeau numérique du premier emplacement, du fonctionnement du premier emplacement et de l'utilisation du produit au premier emplacement.

13. Procédé selon l'une quelconque des revendications 9 à 12, dans lequel la prédiction de l'épuisement du produit au premier emplacement doit inclure le traitement, en utilisant un modèle d'apprentissage automatique, d'informations concernant le produit et le premier emplacement pour générer une prédiction de moment pour l'épuisement du produit au premier emplacement.

14. Procédé selon l'une quelconque des revendications 9 à 13, dans lequel le au moins un processeur (1212) doit être mis en œuvre sur au moins un d'un système de nuage de gestion ou d'un nuage d'inventaire.

15. Support de stockage lisible par ordinateur incluant des instructions qui, lorsqu'elles sont mises en œuvre, amènent au moins un processeur (1212) à au moins mettre en œuvre le procédé selon l'une quelconque des revendications 9 à 14.
